# EUROPEAN PATENT SPECIFICATION

(11) **EP 2 466 174 B1**
(45) Date of publication and mention of the grant of the patent: **28.08.2013**
(21) Application number: 11192000.5
(22) Date of filing: 05.12.2011
(51) Int. Cl.: F16K 17/02, F16K 31/363

(54) **A safety valve**
Sicherheitsventil
Valve de sécurité

(30) Priority: 16.12.2010 IT RE20100096
(43) Date of publication of application: 20.06.2012
(73) Proprietor: Interpump Engineering S.r.l., 42124 Reggio Emilia (IT)
(72) Inventor: Montipo' , Fulvio, 42124 Reggio Emilia (RE) (IT)
(74) Representative: Corradini, Corrado

(56) References cited:
- EP-A2- 2 093 643
- DE-A1- 3 239 255
- DE-A1- 3 300 291
- DE-A1- 3 318 936
- DE-A1- 4 407 974
- DE-A1-102007 021 379

## Description

The present invention relates to a safety valve for a hydraulic device, and more in particular for a high-pressure positive displacement pump.

As is known, a high-pressure positive displacement pump is commonly predisposed to pump a fluid from a tank towards a user, among which for example a gun or a wand for dispensing of the fluid itself.

When the user is closed, the pressure of the fluid in the delivery conduit of the positive-displacement pump tends to grow rapidly up to potentially dangerous levels.

For this reason, the delivery conduit is always equipped with a safety valve which, after a predetermined pressure threshold has been exceeded, is destined to unload the pumped fluid back into the tank, thus enabling the positive displacement pump to be continuously kept in functional mode.

The prior art at present contains various types of safety valves for high-pressure positive displacement pumps, which are however generally beset by great structural complication, especially due to the high pressure which these valves must be able to withstand.

A safety valve which is among the simplest and most reliable comprises an external casing provided with an inlet destined to be connected to the delivery of the pump, and outlet destined to be connected with the user and a discharge which can be connected with the tank.

The internal volume of the valve is sub-divided by a piston which is slidable in two separate chambers of which a first is a chamber communicating with the inlet, the outlet and the discharge, and a second is a chamber communicating with only the outlet, through a conduit which opens downstream of a choke destined to cause a drop in pressure in the fluid between the first chamber and the outlet.

The piston bears a stem which develops in the first chamber and comprises an obturator organ destined to cooperate with a corresponding valve seating, for at least partially selectively opening and closing the discharge.

During the functioning of the pump, the piston is constantly subjected to the fluid pressure in the first chamber and the counter-pressure of the fluid in the second chamber. When the user is open, the fluid pressure in the first chamber is greater than the pressure of the fluid in the second chamber, due to the choke, such that the piston is pushed into a position in which the volume of the second chamber is minimal, and in which the obturator organ completely or almost completely closes the discharge. When the user is closed, a water hammer is generated, the effect of which is to generate a wave of overpressure which returns from the user back towards the valve and diffuses in the second chamber. This wave of overpressure pushes the piston such as to increase the volume of the second chamber towards a position in which the obturator organ opens the discharge. After this transitory stage, a state of equilibrium is reached, in which the pressures of the fluid in the first and the second chamber are substantially equal. Since however the surface of the piston subjected to the pressure of the first chamber is lower than the surface subjected to the pressure of the second chamber, due to the presence of the stem of the obturator organ, the piston remains in the open position of the discharge. When the user is re-opened, the initial position is restored and the piston returns to the closed position of the discharge.

A safety valve of this type is known from the document DE 3318936.

As mentioned herein above, this type of safety valve is rather effective, but notwithstanding this it exhibits the drawback of being constructionally constrained to the rated pressure level the fluid reaches on exiting the pump. In practice, in order for a safety valve of this type to function correctly, as the rated pressure of the fluid progressively increases it is necessary to proportionally increase the diameter of the piston too, or, alternatively, should it be desired to maintain small dimensions for the piston, it is necessary to modify the choke such as to increase the pressure drop between the first and the second chamber.

It therefore follows that if the rated pressure of the fluid reaches a very high level, for example about 160 bar, as with some high-pressure pumps, a safety valve of this type can become excessively large, or it might require a pressure drop that is incompatible with an efficient dispensing of the fluid to the user.

An aim of the present invention is to resolve or at least significantly reduce this drawback in the prior art, with a simple, rational and relatively inexpensive solution.

These aims are attained by the characteristics of the invention reported in the independent claims. The dependent claims delineate preferred and/or especially advantageous aspects of the invention.

In particular, an embodiment of the invention makes available a safety valve comprising an internal volume in which a piston is slidably housed and destined to subdivide the internal volume into two chambers, of which a first chamber communicates with an inlet, with an outlet and with a discharge for a fluid, and a second chamber communicating with the outlet downstream of pressure reducing means of the fluid between the first chamber and the outlet, and a first stem fixed to the piston, which extends into the first chamber and comprises an obturator organ destined to cooperate with a valve seating in order at least partially to close the communication between the first chamber and the discharge following a displacing of the piston in the direction of a reduction of volume of the second chamber, and to open the communication following a displacement of the piston in the opposite direction.

In this embodiment, the valve further comprises a second stem fixed to the piston, which extends into the second chamber and is slidably inserted in an opening of a delimiting wall of the second chamber.

Thanks to the second stem, the piston surface subjected to the pressure in the second chamber is comparable with the surface subjected to the pressure in the first chamber such that given a same rated pressure of the fluid supplied in inlet, the safety valve can function efficiently even with a smaller-dimension piston, i.e. with a smaller drop of pressure between the first and the second chamber with respect to the known safety valves.

In an aspect of the invention, the second stem has a diameter that is substantially equal to the diameter of the first stem.

In this way, the surfaces of the piston subjected respectively to the pressure of the first and the second chamber are more or less the same, thus obtaining the maximum benefit in terms of reduction of piston dimensions and/or reduction of the pressure drop between the first and the second chambers.

In a further aspect of the invention, the obturator organ and the valve seating are however conformed such as to define a sealing diameter that is greater than the diameter of the first stem, where by sealing diameter is meant the minimum diameter of the contact surface between the obturator organ and the valve seating.

In other words, the obturator organ has a maximum diameter that is greater than the diameter of the first stem while the opening defined by the valve seating has a diameter comprised between the diameter of the first stem and the maximum diameter of the obturator organ.

In this way, a certain surface of the obturator organ remains at all times exposed to the fluid pressure in the first chamber, facilitating the opening of the discharge when the outlet of the valve is closed.

In a further aspect of the invention, the first and the second stems have axes that are parallel to the sliding direction of the piston, such as not to obstruct movement thereof, and are further preferably coaxial to one another, such as to simplify the construction thereof.

In a further aspect of the invention, the obturator organ has a tapered shape, for example truncoconical, such as to make its coupling with the valve seating more effective.

In a further aspect of the invention, the valve also comprises contrast means acting on the second stem to halt the piston travel in the direction of volume reduction of the second chamber.

Thanks to these contrast means, the piston can be halted before the obturator organ completely closes the communication between the first chamber and the discharge, such that a part of the pumped fluid is also discharged when the user is opened, thus reducing the fluid pressure which is supplied to the user itself.

The above-cited contrast means can for example comprise an endrun body destined to abuttingly receive the second stem of the piston; or they can comprise an elastic element, typically a spring, destined to act on the second stem such as to contrast the piston travel.

In a further aspect of the invention, the contrast means are regulatable such that the halt position of the piston can be adjusted.

Thanks to this solution, it is advantageously possible to regulate the degree of aperture of the valve seating when the piston reaches the halt position, and thus also regulate the fluid pressure that is supplied to the user.

By way of example, if the contrast means comprise an endrun body, the endrun body can be screwed in a threaded hole and be associated to a manually-activatable knob such as to screw and unscrew the endrun body, thus changing its position in the threaded hole.

If on the other hand the contrast means comprise an elastic element, the elastic element can be interposed between a support associated to the second stem and a further support, which is screwed in a threaded hole and is associated to a knob that is manually activatable such as to screw and unscrew the further support, thus varying the compression of the elastic element.

A further embodiment of the invention makes available a pump comprising the safety valve described above, in which the inlet of the valve is connected to a pump delivery conduit, and the outlet of the valve is connected to a user. Further characteristics and advantages of the invention will emerge from a reading of the following description, provided by way of non-limiting example, with the aid of the accompanying illustrated figures of the drawings.
Figure 1 is a section of a safety valve of an embodiment of the invention, the section being made along a plane containing the axis of the piston, illustrated when the discharge is closed;
figure 2 is the section of figure 1, shown when the discharge is open;
figure 3 is a section of a safety valve in a different embodiment of the invention, the section being made along a plane containing the axis of the piston and being illustrated in a situation in which the discharge is closed;
figure 4 is the section of figure 3, shown when the discharge is open;
figure 5 is a schematic representation of a high-pressure plant comprising the safety valve of figure 1.

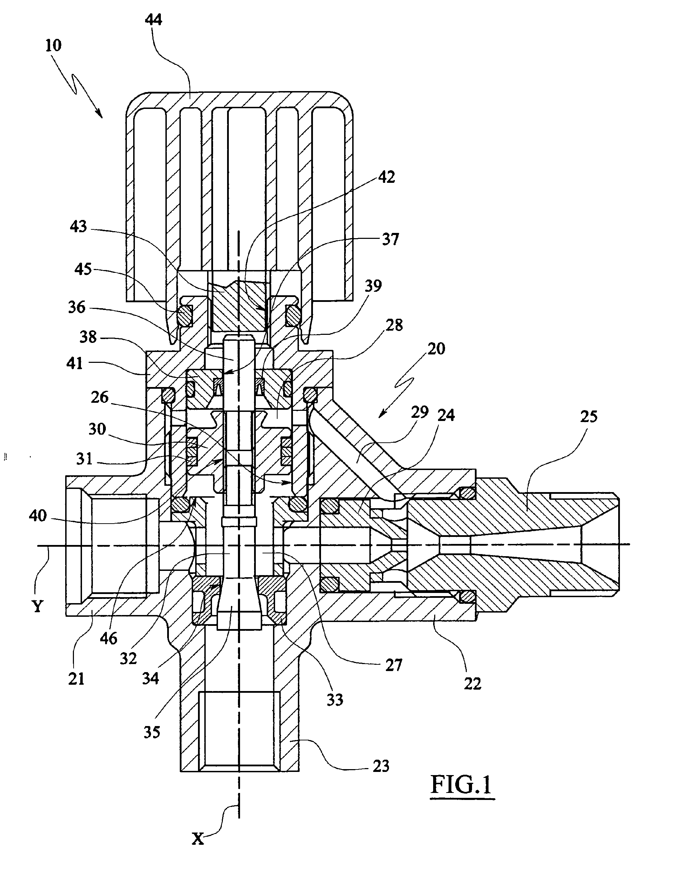

The safety valve 10 illustrated in figure 1 comprises an external casing, denoted in its entirety by 20, which is formed by a plurality of components assembled to one another with an interposing of special seals.

The external casing 20 is provided with an inlet mouth 21, an outlet mouth 22 and a discharge mouth 23 for a pressurised fluid.

A first hollow insert 24 is associated to the outlet mouth 22, which insert 24 is internally shaped such as to define a choke destined to create a pressure drop in the fluid between upstream and downstream of the first insert 24.

A second hollow insert 25 is further associated to the outlet mouth 22 and is shaped such as to slow down the fluid current downstream of the choke.

The external casing 20 contains a piston 30, conformed substantially as a cylindrical plate, which is coaxially housed in a corresponding cylindrical seating 26, in which it is guided to slide along the direction of an axis X thereof.

In particular, the axis X of the piston 30 is parallel, in the example coincident with the axis of the discharge mouth 23, and is inclined, in the example perpendicular, to the axes of the inlet mouth 21 and the outlet mouth 22 which, in the illustrated example, are coincident and both denoted by Y.

The lateral skirt of the piston 30 bears a series of annular seals 31, which are in contact with the surface of the cylindrical seating 26, such that the piston 30 subdivides the internal volume of the casing 20 into two separate chambers respectively denoted by 27 and 28.

The first chamber 27 communicates with the inlet mouth 21, the outlet mouth 22 and the discharge mouth 23, while the second chamber 28 communicates only with the outlet mouth 22, via a channel 29 which opens between the first insert 24 and the second insert 25, i.e. downstream of the choke which is destined to cause the pressure in the fluid to drop.

The piston 30 bears a first coaxial stem 32, which develops in the first chamber 27 up until it inserts in a bushing 33 which is coaxially inserted in the discharge mouth 23.

The bushing 33 provides a valve seating 34 destined to cooperate with an obturator organ 35 in order to open and close the discharge mouth 23.

The obturator organ 35 is fashioned in a single body with the first stem 32 and is positioned at an end thereof which projects from the bushing 33 towards the inside of the discharge mouth 23.

The obturator organ 35 has a truncoconical shape, coaxial with the first stem 32 and tapered towards the piston 30, such as to improve the coupling with the valve seating 34.

In particular, the maximum diameter of the obturator organ 35 is smaller than the diameter of the piston 30 and greater than the diameter of the first stem 32, while the internal diameter of the bushing 33, i.e. the diameter of the opening of the valve seating 34, is comprised between the diameter of the first stem 32 and the maximum diameter of the obturator organ 35. In this way, the sealing diameter realised by the obturator organ 35 and by the valve seating 34, i.e. the minimum diameter of the annular surface of reciprocal contact is greater than the diameter of the first stem 32, such that a small portion of the obturator organ 35 remains at all times exposed to the pressure of the first chamber 27, which tends to push it in the opening direction of the discharge mouth 23.

The piston 30 also bears a second stem 36 which develops in the second chamber 28 up to slidably inserting in the central hole 37 of a guide bushing 38, which is fixed to the external casing 20 such as to define one of the fixed delimiting walls of the second chamber 28.

An annular lip-seal 39 is further coupled to the central hole 37 of the guide bushing 38, which lip-seal 39 coaxially receives the second stem 36 in order to guarantee the seal in the second chamber 28.

The second stem 36 is coaxial to the first stem 32 and has substantially the same diameter thereas, such that the surface of the piston 30 exposed to the pressure of the second chamber 28 is substantially equal to the surface of the piston 30 exposed to the first chamber 27.

In the illustrated example, the first and the second stem 32 and 36 are realised in separate bodies and are both screwed in a threaded through-hole 40 afforded in the centre of the piston 30. It is however also possible that the first and second stem 32 and 36 can be realised in a single body, inserted and solidly blocked to the piston 30.

As illustrated in figure 1, the free end of the second stem 36 projects with respect to the guide bushing 38, beyond the second chamber 28 and internally of a sleeve 41.

The internal volume of the sleeve 41 is at atmospheric pressure, such that the free end of the second stem 36 is continually subjected substantially to the same pressure to which the free end of the first stem 32 is also subjected.

The sleeve 41 exhibits a threaded through-hole 42 coaxial with the axis X of the piston 30.

A threaded pin 43 is screwed internally of the threaded hole 42, which pin 43 is destined to abuttingly receive the free end of the second stem 36, such as to function as an endrun for the piston 30.

The threaded pin 43 is coupled to a knob 44, which is rotatably coupled to the external surface of the sleeve 41, with an interposing of a seal ring 45, and is destined to be manually rotated such as to screw and unscrew the threaded pin 43, by varying the axial position thereof and thus the endrun position of the piston 30.

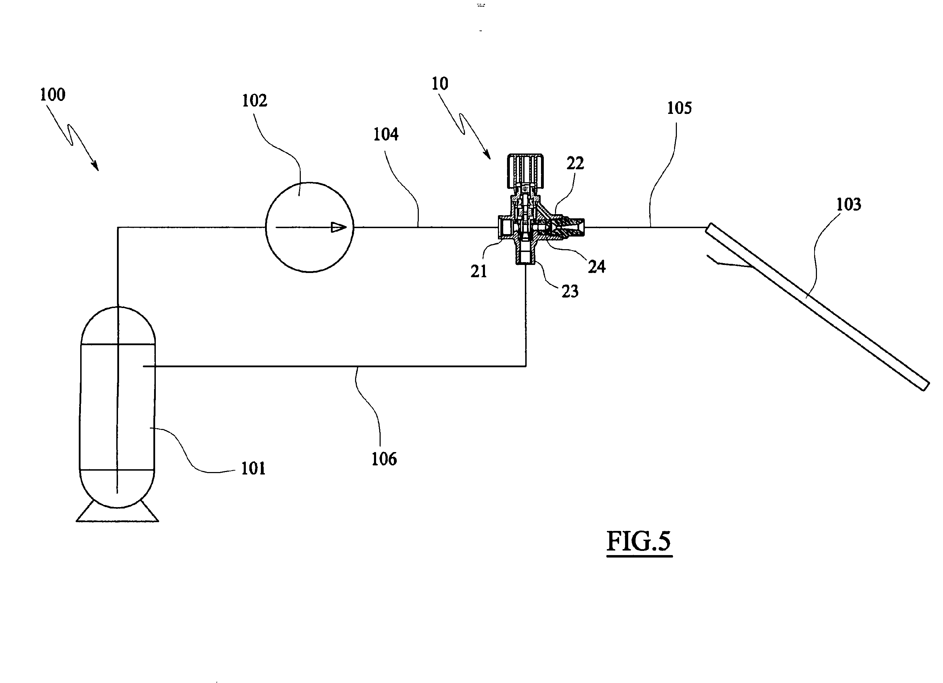

The above-described safety valve 10 can be used in a high-pressure plant 100 of the type schematically illustrated in figure 5, which comprises a tank 101 for containing a fluid, for example water, and a high-pressure positive-displacement pump 102, typically a piston pump, for pumping the fluid from the tank 101 towards a user 103, in the example a dispensing wand.

The safety valve 10 is hydraulically interposed between the positive-displacement pump 102 and the user 103.

In more detail, the inlet mouth 21 of the safety valve 10 is connected to a delivery conduit 104 of the positive-displacement pump 102, the outlet mouth 22 is connected to a user 103 via a connecting conduit 105, while the discharge mouth 23 is connected to a return conduit 106 which returns to the tank 101.

During functioning of the plant 100, i.e. when the positive displacement pump 102 is functioning, the piston 30 of the safety valve 10 is constantly subjected both to the pressure exerted by the fluid which is in the first chamber 27 and to the contrary pressure exerted by the fluid which is in the second chamber 28.

When the user 103 is open, i.e. when the dispensing wand is commanded to open, the pumped fluid runs into the safety valve 10 from the inlet mouth 21 towards the outlet mouth 22.

In this way, due to the choke defined by the first insert 24, the pressure of the fluid in the first chamber 27 is greater than the pressure of the fluid in the second chamber 28, such that the piston 30 is pushed in the direction of reducing the volume of the second chamber 28, and therefore towards the position illustrated in figure 1, in which the obturator organ 35 completely closes the valve seating 34, preventing the fluid from flowing into the discharge mouth 23.

Since the surface of the piston 30 exposed to the pressure of the second chamber 28 is substantially equal to the surface of the piston 30 exposed to the pressure of the first chamber 27, it follows that the discharge mouth 23 remains closed even if the pressure fall caused by the first insert 24 is rather small.

When the user 103 is closed, i.e. when the dispensing wand is commanded to close, a water hammer is generated in the connecting conduit 105, the effect of which is to generate an overpressure wave which returns from the user 103 back towards the safety valve 10.

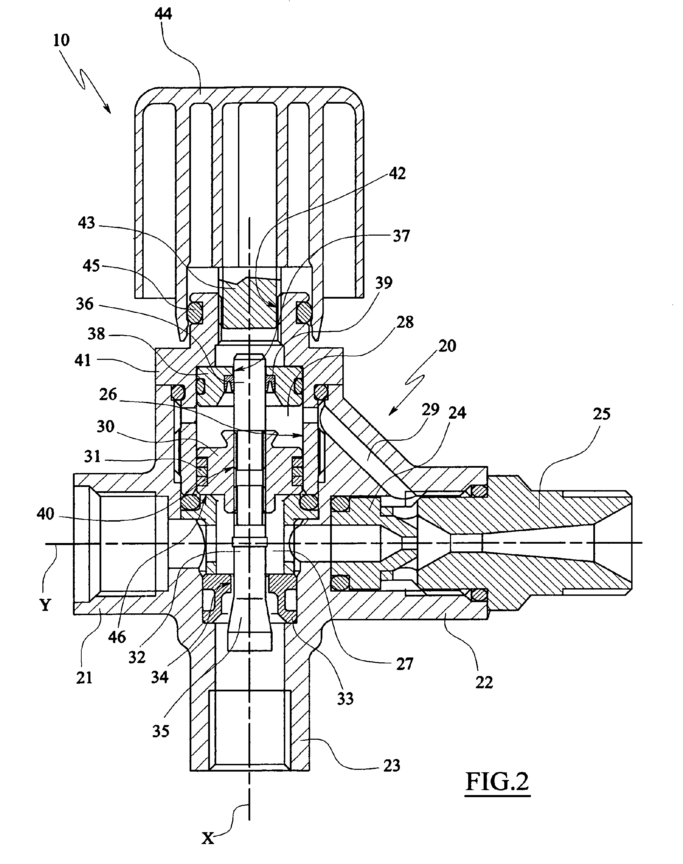

The overpressure wave spreads into the second chamber 28, pushing the piston 30 in the direction of increasing the volume of the second chamber 28, up to bringing it to abut against an abutment 46 of the cylindrical seating 26, as shown in figure 2.

In this position, the obturator organ 35 is decoupled from the valve seating 34, opening the discharge mouth 23 which returns the pressurised fluid into the tank 101.

When the transitory effect of the water hammer ceases, the fluid pressures in the first and the second chambers 17, 28 tend to balance, such that the discharge mouth 23 remains open.

The opening of the discharge mouth 23 is enabled and facilitated also by the fact that the sealing diameter between the obturator organ 35 and the valve seating 34 is greater than the diameter of the first stem 32, such that, given a same pressure in the first and the second chamber 27 and 28, the portion of the obturator organ 35 which is exposed to the pressure of the first chamber 27 is subject to a push in a downwards direction.

When the user 103 is opened, the initial condition is restored and the piston 30 returns into the closed position of the discharge mouth 23.

Note that thanks to the presence of the threaded pin 43, the safety valve 10 is effectively able also to regulate the fluid pressure which is dispensed when the user 103 is open.

By rotating the knob 44, the threaded pin 43 can be arranged in an axial position such as to stop the travel of the piston 30 before the obturator organ 35 completely closes the valve seating 34, such that the discharge mouth 23 is partially open even when the user 103 is commanded to open.

In this way, a part of the pressurised fluid will always be recycled into the tank 101, proportionally reducing the pressure of the remaining part of the fluid which is instead normally supplied to the user 103.

Obviously, by regulating the position of the threaded pin 43 in the threaded hole 42 it is possible to stop the piston 30 in various endrun positions, to which correspond different degrees of aperture of the valve seating 34 and thus various pressure values of the dispensed fluid.

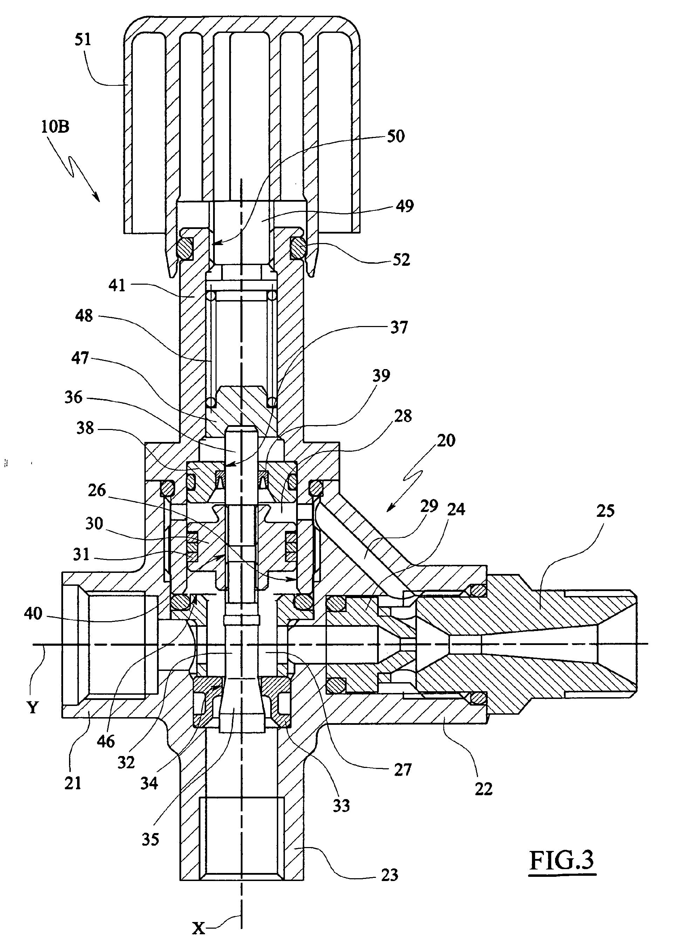

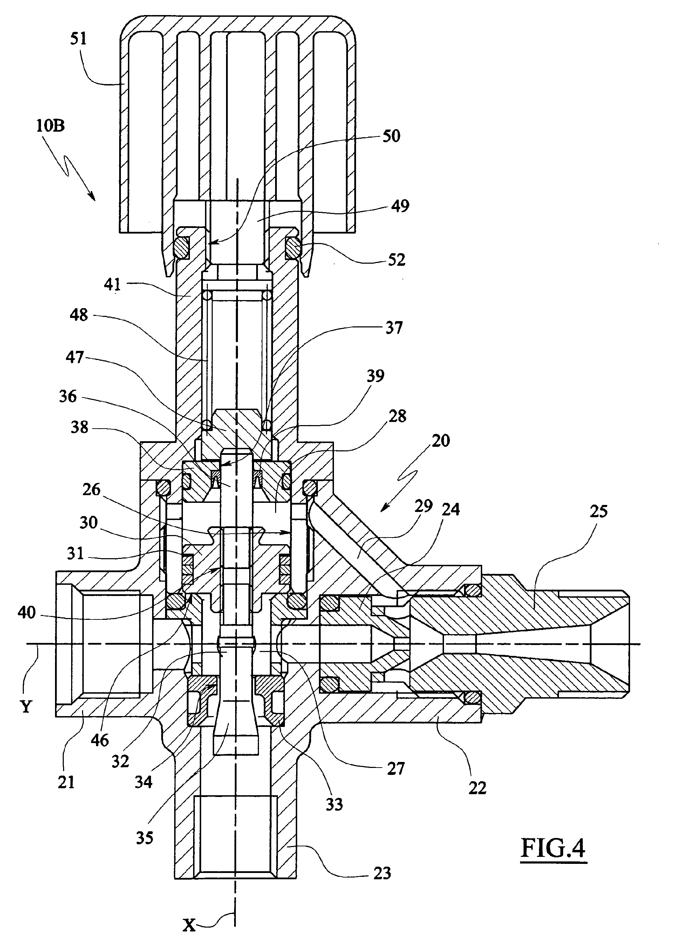

Figures 3 and 4 illustrate a safety valve 10B in an alternative embodiment of the invention, which differs from the preceding embodiment only with respect to aspects as described herein below.

The free end of the second stem 36, which projects from the guide bushing 38 internally of the sleeve 41 at atmospheric pressure, bears a support 47 which is slidably housed in the sleeve 41 such as to follow the axial displacements of the piston 30.

This support 47 supports a helix spring 48, which is interposed and compressed between the support 47 and the head of a threaded pin 49 which is screwed to the end 50 of the sleeve 41.

The threaded pin 49 is in turn fixed to a knob 51, which knob 51 is rotatably coupled to the external surface of the sleeve 41, with an interposing of a seal ring 52, and is destined to be rotated manually such as to screw and unscrew the threaded pin 49 into and from the threaded hole 50, such as to vary the degree of compression of the helix spring 48.

The safety valve 10B can be used in the plant 100 illustrated in figure 5, to replace the safety valve 10 described herein above, and has the same functioning principles thereas.

In particular, thanks to the fluid pressures in the first and second chambers 27 and 28, when the user 103 is open, the safety valve 10B is destined to assume the configuration of figure 3, in which the obturator organ 35 closes the discharge mouth 23, while when the user 103 is closed, the safety valve 10B is destined to assume the configuration of figure 4, in which the obturator organ 35 opens the discharge mouth 23.

In this case, the piston 30 travel in the direction of the volume reduction of the second chamber 28 is however constantly contrasted by the helix spring 48, which is thus able to halt it when the sum of the elastic force of the spring 48 and the thrust exerted on the piston 30 by the fluid pressure in the second chamber 28 is equal to the thrust exerted on the piston 30 by the fluid pressure in the first chamber 27.

Therefore, by regulating the compression of the helix spring 48 using the knob 51, the piston 30 travel can be halted before the obturator organ 35 completely closes the valve seating 34, such that the discharge mouth 23 is always partially open, proportionally regulating also the pressure of the fluid that is dispensed to the user 103.

## Claims

1. A safety valve (10, 10B) comprising an internal volume in which a piston (30) is slidably housed, which piston (30) is destined to sub-divide the internal volume into two chambers, of which a first chamber (27) communicating with an inlet (21), with an outlet (22) and with a discharge (23) for a fluid, and a second chamber (28) communicating with the outlet (22) downstream of pressure reducing means (24) of the fluid between the first chamber (27) and the outlet (22), and a first stem (32) fixed to the piston (30), which extends into the first chamber (27) and comprises an obturator organ (35) destined to cooperate with a valve seating (34) in order to at least partly close communication between the first chamber (27) and the discharge (23) following a displacement of the piston (30) in a volume-reducing direction of the second chamber (28), and in order to open the communication following a displacement of the piston (30) in the opposite direction, **characterised in that** it comprises a second stem (36) fixed to the piston (30), which second stem (36) extends into the second chamber (28) and is slidably inserted in an opening (37) of a delimiting wall (38) of the second chamber (28).

2. The valve (10, 10B) of claim 1, **characterised in that** the second stem (36) has a substantially equal diameter to a diameter of the first stem (32).

3. The valve (10, 10B) of claim 2, **characterised in that** the obturator (35) and the valve seating (34) are conformed such as to define a sealing diameter that is greater than a diameter of the first stem (32).

4. The valve (10, 10B) of claim 1, **characterised in that** the first and second stem (32, 36) have axes (X) that are parallel to the sliding direction of the piston (30).

5. The valve (10, 10B) of claim 4, **characterised in that** the first and second stem (32, 36) are reciprocally coaxial.

6. The valve (10, 10B) of claim 1, **characterised in that** the obturator organ (35)
has a tapered shape.

7. The valve (10, 10B) of claim 1, **characterised in that** it comprises contrast means (43, 48) destined to act on the second stem (36) such as to stop a travel of the piston (30) in a reducing direction of a volume of the second chamber (28).

8. The valve (10, 10B) of claim 7, **characterised in that** the contrast means (43, 48) are regulatable such as to be able to adjust a halt position of the piston (30).

9. The valve (10) of claim 8, **characterised in that** the contrast means comprise an endrun body (43), which is screwed into a corresponding threaded hole (42) and is associated to a manually-activated knob (44) such as to screw and unscrew the endrun body (43) into and out of the threaded hole (42).

10. The valve (10B) of claim 8, **characterised in that** the contrast means comprise an elastic element (48), which is interposed between a support (47) associated to the second stem (36) and a further support (49), which is screwed into a threaded hole (50) and is associated to a manually-activated knob (51) such as to screw and unscrew the further support (49) into and out of the threaded hole (50).

11. A pump (102), **characterised in that** it comprises a valve (10, 10B) as in any one of the preceding claims, wherein the inlet (21) of the valve (10, 10B) is connected with a delivery conduit (104) of the pump (102), and the outlet (22) of the valve (10, 10B) is connected to a user (103).

## Patentansprüche

1. Sicherheitsventil (10, 10B), umfassend ein Innenvolumen, in dem ein Kolben (30) gleitfähig untergebracht ist, wobei der Kolben (30) dafür bestimmt ist, das Innenvolumen in zwei Kammer zu unterteilen, von denen eine erste Kammer (27) mit einem Einlass (21), mit einem Auslass (22) und mit einem Austritt (23) für ein Fluid in Verbindung steht und eine zweite Kammer (28) stromabwärts von Druckminderungsmitteln (24) für das Fluid zwischen der ersten Kammer (27) und dem Auslass (22) mit dem Auslass (22) verbunden ist, und eine erste Spindel (32), die an dem Kolben (30) befestigt ist und sich in die erste Kammer (27) erstreckt und ein Verschlussorgan (35) umfasst, das dafür bestimmt ist, mit einem Ventilsitz (34) zusammenzuwirken, um nach einer Verlagerung des Kolbens (30) in eine das Volumen der zweiten Kammer (28) reduzierende Richtung zumindest teilweise die Verbindung zwischen der ersten Kammer (27) und dem Austritt (23) zu verschließen und um die Verbindung nach einer Verlagerung des Kolbens (30) in die entgegengesetzte Richtung zu öffnen, **dadurch gekennzeichnet, dass** es eine zweite Spindel (36) umfasst, die am Kolben (30) befestigt ist, wobei sich die zweite Spindel (36) in die zweite Kammer (28) erstreckt und gleitfähig in eine Öffnung (37) einer Begrenzungswand (38) der zweiten Kammer (28) eingesetzt ist.

2. Ventil (10, 10B) nach Anspruch 1, **dadurch gekennzeichnet, dass** die zweite Spindel (36) einen Durchmesser aufweist, der im Wesentlichen einem Durchmesser der ersten Spindel (32) gleicht.

3. Ventil (10, 10B) nach Anspruch 2, **dadurch gekennzeichnet, dass** das Verschlussstück (35) und der Ventilsitz (34) derart aneinander angepasst sind, dass sie einen abdichtenden Durchmesser bilden, der größer ist als ein Durchmesser der ersten Spindel (32).

4. Ventil (10, 10B) nach Anspruch 1, **dadurch gekennzeichnet, dass** die erste und die zweite Spindel (32, 36) Achsen (X) aufweisen, die parallel zur Gleitrichtung des Kolbens (30) verlaufen.

5. Ventil (10, 10B) nach Anspruch 4, **dadurch gekennzeichnet, dass** die erste und die zweite Spindel (32, 36) koaxial zueinander liegen.

6. Ventil (10, 10B) nach Anspruch 1, **dadurch gekennzeichnet, dass** das Verschlussorgan (35) eine abgeschrägte Form aufweist.

7. Ventil (10, 10B) nach Anspruch 1, **dadurch gekennzeichnet, dass** es Kontrastmittel (43, 48) umfasst, die dafür bestimmt sind, auf die zweite Spindel (36) derart einzuwirken, dass eine Bewegung des Kolbens (30) in eine das Volumen der zweiten Kammer (28) reduzierende Richtung gestoppt wird.

8. Ventil (10, 10B) nach Anspruch 7, **dadurch gekennzeichnet, dass** die Kontrastmittel (43, 48) derart regulierbar sind, dass eine Halteposition des Kolbens (30) justiert werden kann.

9. Ventil (10) nach Anspruch 8, **dadurch gekennzeichnet, dass** die Kontrastmittel einen Anschlagkörper (43) umfassen, der in eine entsprechende, mit Gewinde versehene Öffnung (42) geschraubt und mit einem manuell betätigten Knauf (44) verbunden ist, um den Anschlagkörper (43) in die mit Gewinde versehene Öffnung (42) hinein und aus ihr herauszuschrauben.

10. Ventil (10B) nach Anspruch 8, **dadurch gekennzeichnet, dass** die Kontrastmittel ein elastisches Element (48) umfassen, das zwischen einem mit der zweiten Spindel (36) verbundenen Auflager (47) und einem weiteren Auflager (49) angeordnet ist, das in eine mit Gewinde versehene Öffnung (50) geschraubt und mit einem manuell betätigten Knauf (51) verbunden ist, um das weitere Auflager (49) in die mit Gewinde versehene Öffnung (50) hinein und aus ihr herauszuschrauben.

11. Pumpe (102), **dadurch gekennzeichnet, dass** sie ein Ventil (10, 10B) nach einem der vorhergehenden Ansprüche umfasst, wobei der Einlass (21) des Ventils (10, 10B) an eine Zufuhrleitung (104) der Pumpe (102) angeschlossen ist und der Auslass (22) des Ventils (10, 10B) an einen Abnehmer 8103) angeschlossen ist.

## Revendications

1. Soupape de sécurité (10, 10B) comprenant un volume interne dans lequel un piston (30) est logé de manière coulissante, ledit piston (30) étant destiné à subdiviser le volume interne en deux chambres, la première chambre (27) communiquant avec une entrée (21), une sortie (22) et une évacuation (23) pour un fluide, et une deuxième chambre (28) communiquant avec la sortie (22) en aval d'un moyen de réduction de pression (24) du fluide entre la première chambre (27) et la sortie (22), et une première tige (32) fixée au piston (30), qui s'étend dans la première chambre (27) et comprend un élément obturateur (35) destiné à coopérer avec un siège de soupape (34) de manière à interrompre au moins partiellement la communication entre la première chambre (27) et l'évacuation (23) suite à un déplacement du piston (30) dans une direction de réduction du volume de la deuxième chambre (28), et de manière à ouvrir la communication suite à un déplacement du piston (30) dans la direction opposée, **caractérisée en ce qu'**elle comprend une deuxième tige (36) fixée au piston (30), ladite deuxième tige (36) s'étendant dans la deuxième chambre (28) et étant insérée de manière coulissante dans une ouverture (37) d'une cloison de délimitation (38) de la deuxième chambre (28).

2. Soupape (10, 10B) selon la revendication 1, **caractérisée en ce que** la deuxième tige (36) présente un diamètre sensiblement égal au diamètre de la première tige (32).

3. Soupape (10, 10B) selon la revendication 2, **caractérisée en ce que** l'obturateur (35) et le siège de soupape (34) sont conformés de manière à définir un diamètre d'étanchéité supérieur à un diamètre de la première tige (32).

4. Soupape (10, 10B) selon la revendication 1, **caractérisée en ce que** les axes (X) des première et deuxième tiges (32, 36) sont parallèles à la direction de coulissement du piston (30).

5. Soupape (10, 10B) selon la revendication 4, **caractérisée en ce que** les première et deuxième tiges (32, 36) sont réciproquement coaxiales.

6. Soupape (10, 10B) selon la revendication 1, **caractérisée en ce que** l'élément obturateur (35) présente une forme conique.

7. Soupape (10, 10B) selon la revendication 1, **caractérisée en ce qu'**elle comprend un moyen de contraste (43, 48) destiné à agir sur la deuxième tige (36) de manière à arrêter une course du piston (30) dans une direction de réduction d'un volume de la deuxième chambre (28).

8. Soupape (10, 10B) selon la revendication 7, **caractérisée en ce que** le moyen de contraste (43, 48) est réglable de manière à permettre l'ajustement d'une position d'arrêt du piston (30).

9. Soupape (10) selon la revendication 8, **caractérisée en ce que** le moyen de contraste comprend un corps de butée (43) qui est vissé dans un trou taraudé correspondant (42) et est associé à une molette à actionnement manuel (44), de manière à visser et dévisser le corps de butée (43) dans le trou taraudé (42) et hors de celui-ci.

10. Soupape (10B) selon la revendication 8, **caractérisée en ce que** le moyen de contraste comprend un élément élastique (48) qui est interposé entre un support (47) associé à la deuxième tige (36) et un autre support (49) qui est vissé dans un trou taraudé (50) et est associé à une molette à actionnement manuel (51), de manière à visser et dévisser l'autre support (49) dans le trou taraudé (50) et hors de celui-ci.

11. Pompe (102) **caractérisée en ce qu'**elle comprend une soupape (10, 10B) selon l'une quelconque des revendications précédentes, dans laquelle l'entrée (21) de la soupape (10, 10B) est connectée à une conduite de refoulement (104) de la pompe (102), et la sortie (22) de la soupape (10, 10B) est connectée à un utilisateur (103).
